Europäisches Patentamt

European Patent Office

Office européen des brevets

(11) Veröffentlichungsnummer: **0 249 786 B1**

# (12) EUROPÄISCHE PATENTSCHRIFT

(45) Veröffentlichungstag der Patentschrift: **10.03.93**

(51) Int. Cl.⁵: **C08F 8/12**, D06M 15/31, D06M 15/233

(21) Anmeldenummer: **87107857.2**

(22) Anmeldetag: **30.05.87**

(54) **Verfahren zur Herstellung wasserlöslicher Copolymerisate und deren Verwendung als Schlichtemittel.**

(30) Priorität: **12.06.86 DE 3619721**

(43) Veröffentlichungstag der Anmeldung:
**23.12.87 Patentblatt 87/52**

(45) Bekanntmachung des Hinweises auf die Patenterteilung:
**10.03.93 Patentblatt 93/10**

(84) Benannte Vertragsstaaten:
**AT CH DE FR GB IT LI NL**

(56) Entgegenhaltungen:
**EP-A- 0 067 362**
**DE-A- 1 469 350**
**DE-A- 2 903 267**
**GB-A- 824 138**

**PATENT ABSTRACTS OF JAPAN, Band 10, Nr. 269 (C-372)[2325], 12. September 1986; & JP-A-61 95 006 (NIPPON SHOKUHIN KAKO K.K.) 13-05-1986**

(73) Patentinhaber: **Wolff Walsrode Aktiengesellschaft**
**Postfach**
**W-3030 Walsrode 1(DE)**

(72) Erfinder: **Hoppe, Lutz, Dr.**
**Am Badeteich 8**
**W-3030 Walsrode(DE)**
Erfinder: **Huhn, Helmut, Dr.**
**Nordsunderberg 13**
**W-3030 Walsrode(DE)**
Erfinder: **Karstens, Werner, Ing.**
**Wenzinger Strasse 2**
**W-3036 Bomlitz(DE)**
Erfinder: **Reinhardt, Eugen**
**Geibelstrasse 57**
**W-3030 Walsrode(DE)**

(74) Vertreter: **Zobel, Manfred, Dr. et al**
**c/o BAYER AG Konzernverwaltung RP Patentabteilung Bayerwerk**
**W-5090 Leverkusen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Herstellung wasserlöslicher Copolymerisate, indem man Styrol und Acrylnitril polymerisiert, alkalisch hydrolysiert und gegebenenfalls mit $H_2O_2$ behandelt und die Verwendung der wäßrigen Lösungen dieser Copolymerisate als Schlichtemittel für Fasern.

Es ist bereits bekannt, wäßrige Lösungen von Acrylsäurecopolymerisaten als Schlichtemittel für natürliche und synthetische Fasern einzusetzen.

Vor dem Weben müssen nämlich die Kettfäden fast aller Garne mit Schlichtemittel ausgerüstet werden, darauf die Fasern zu einem in sich geschlossenen Faserverband verklebt und die Fäden geglättet werden, damit diese den hohen Beanspruchungen beim Webprozeß gewachsen sind. Dabei müssen aber die geschlichteten Fäden die Vorbereitungen zum Weben leicht durchführen lassen und z.B. während des Aufbewahrens nicht gegenseitig verkleben, und sie sollen schließlich, nachdem die geschlichteten Fäden verwebt sind, aus dem Gewebe wieder durch Waschen entfernt werden können, damit sie bei nachfolgenden Veredlungsprozessen, z.B. beim Färben oder Imprägnieren, keine Störungen verursachen. Die zum Einsatz kommenden Copolymerisate können durch Emulsions-, Suspensions-oder Lösungspolymerisation hergestellt werden (DOS 2 308 151, DOS 2 852 832, DOS 2 812 038, DOS 2 714 897, D-PS 2 009 433). Dabei erhält man aber Polymerisate, die immer noch einen gewissen Anteil nicht umgesetzter Monomere enthalten. Dieser Rest an ungesättigten Verbindungen muß aus dem Polymeren durch aufwendige Verfahren entfernt und wieder aufgearbeitet werden da er sonst eine erhebliche Umweltbelastung darstellt.

Überraschenderweise gelingt es nun mit dem erfindungsgemäßen Verfahren, eine wäßrige Lösung von Copolymerisaten zur Verfügung zu stellen, die nicht nur frei von Restmonomeren ist und damit unmittelbar nach der Herstellung ohne weitere Aufarbeitung als Schlichtemittel eingesetzt werden kann, sondern auch durch Polymerisation von nur wenigen, leicht zugänglichen und preisgünstigen Monomeren erhalten wird.

Gegenstand der vorliegenden Erfindung sind daher Verfahren zur Herstellung von wäßrigen Lösungen hydrolysierter Styrol/Acrylnitril-Copolymerisate, deren Carboxylgruppen ganz oder teilweise als $NH_4$- und/oder Alkalisalz vorliegen, die dadurch gekennzeichnet sind, daß man

a) 40-90 Gew.-%, vorzugsweise 50-70 Gew.-%, Acrylnitril,

b) 10-60 Gew.-%, vorzugsweise 30-50 Gew.-%, Styrol

und

c) 0-20 Gew.-%, vorzugsweise 3 bis 15 Gew.-% wenigstens eines weiteren alkalisch hydrolysierbaren Monomeren

einer Suspension- oder Emulsionspolymerisation unterwirft, die wäßrige Dispersion oder Emulsion anschließend bei 90-220°C, vorzugsweise 120-190°C, in Gegenwart von Alkalien und/oder Erdalkalien hydrolysiert und gegebenenfalls die Copolymerisatlösung mit Wasserstoffperoxid behandelt, wobei ein Teil des Styrols durch ein alkalisch nicht hydrolysierbares Monomer ersetzt sein kann, z.B. durch Butadien, Isopren oder Divinylbenzol.

Die so erhaltene wäßrige Lösung des hydrolysierten und gegebenenfalls durch die $H_2O_2$ Behandlung in seiner Viskosität reduzierten Copolymerisats, das vorzugsweise

| | | |
|---|---|---|
| a) | Acrylamid | 12-29 Gew.-%, |
| b) | Ammoniumacrylat | 3-70 Gew.-%, |
| c) | Natriumacrylat | 0-70 Gew.-%, |
| d) | Acrylsäure | 5- 8 Gew.-%, |
| e) | Styrol | 5-55 Gew.-%, |

enthält, und bei dem die Summe aus a-e 100 Gew.-% ergibt, weist keine Restmonomeren auf und kann daher ohne weitere Aufarbeitung als Schlichtemittel verwendet werden.

In einer bevorzugten Ausführungsform können neben Styrol und Acrlynitril noch 0-20 Gew.-% weitere ungesättigte und alkalisch hydrolysierbare Monomere wie z.B. Acrylate oder Methacrylate mit bis zu 5 C-Atomen in der Alkoholkomponente, Vinylacetat und/oder z.B. ungesättigte Carbonsäuren wie Maleinsäure, Methacrylsäure und Itakonsäure copolymerisiert werden. In einer anderen bevorzugten Ausführungsform werden nur Acrylnitril und Styrol copolymerisiert.

Die Polymerisation des Monomergemisches kann kontinuierlich oder diskontinuierlich erfolgen, wobei vorzugsweise nach dem Emulsionspolymerisationsverfahren gearbeitet wird, wie es in Ullmanns Encyklopä-

2

die der technischen Chemie, 4. Auflage, Band 19, Seite 132 beschrieben ist.

Die Grenzviskositästzahl [$\eta$] der Polymerisate gemessen in DMF mit 0,3 % NaNO$_3$ sollte zwischen 0,3-4,5 dl/g, vorzugsweise 0,8-2,8 dl/g, betragen. Eine vorzugweise 15-30 Gew.-%ige wäßrige Dispersion des Polymerisats wird im gleichen oder gesonderten Reaktor bei Temperaturen von 90-220°C, vorzugsweise 120-190°C, mit Alkali-und/oder Erdalkalimetallhydroxiden wie NaOH, KOH und/oder Mg(OH)$_2$ mit bis zu 80 Mol-%, vorzugsweise 40-70 Mol-%, der hydrolysierbaren Monomeren des Polymerisats hydrolysiert.

Vorzugsweise wird hydrolysiert wie es in der DE-A-2 031 972 beschrieben ist.

Wenn die Hydrolysatlösungen eine zu hohe Viskosität aufweisen, empfiehlt es sich, die Lösung mit 0,01-2 Gew.-%, bezogen auf das Polymere, Wasserstoffperoxid bei 20-100°C zu behandeln. Das Hydrolysat sollte vorzugsweise eine relative Viskosität von 0,5 bis 5,0, bevorzugt von 1,0 bis 3,0 gemessen an einer Lösung von 1 g Hydrolysat in 100 ml 2-molarer-wäßriger NaNO$_3$-Lösung aufweisen. Unter relativer Viskosität wird verstanden der Quotient aus Ubbelohde Viskosität der Polymerlösung und der Ubbelohde Viskosität des reinen Lösungsmittels.

Die wäßrigen Lösungen sind an sich oder in Abmischungen mit z.B. Stärke oder Carboxymethylcellulose als Schlichtemittel für Stapelfasern (Baumwoll, Zellwolle, synthetische Fasern und deren Mischungen) und Filamentgarnen (Polyamid- und Polyesterfasern, Viskosegarne) direkt zu verwenden, wobei der Gehalt an Festkörper, bezogen auf die gesamte Lösung vorzugsweise 10 bis 35 Gew.-%, insbesondere 20 bis 30 Gew.-% beträgt.

Beispiel 1

1.1 Polymerisation

In einen mit Rührer versehenen Autoklaven werden

```
40       kg entionisiertes Wasser
 0,1     kg 20 gew.-%iges wäßriges Mersolat®
         (Alkansulfonat)
 1,100   kg Acrylnitril
 0,700   kg Styrol
 0,200   kg Methylacrylat
```

zusammen vermischt und nach Verschließen des Autoklaven unter Stickstoff auf 40°C aufgeheizt.

Nach Erreichen dieser Temperatur werden

```
 1,09    kg einer Lösung aus 0,09 kg
         35 gew.-%igem H2O2 und
         1 kg entionisiertem Wasser
 1,03    kg einer Lösung aus 0,03 kg
         Isoascorbinsäure und 1 kg
         entionisiertem Wasser
```

als Redoxinitiator über eine Druckschleuse zum Autoklaveninhalt gegeben.

Darauf erfolgt innerhalb von 300 Minuten die gleichzeitige und kontinuierliche Zuschleusung von

1. einem Monomeren-Gemisch, bestehend aus

    20,9 kg      Acrylnitril

    13,3 kg      Styrol

    3,8 kg       Methylacrylat

2. einer Initiatorlösung, bestehend aus

    0,3 kg       35 gew.-%igem H$_2$O$_2$

9,0 kg     entionisiertem Wasser

3. einer Emulgatorlösung, bestehend aus

7,0 kg     entionisiertem Wasser

1,9 kg     20 gew.-%iger wäßriger Mersolat®-Lösung (Alkansulfonat)

0,1 kg     Isoascorbinsäure

Nach Beendigung der Zuschleusung wird der Autoklaveninhalt noch 360 Minuten bei 40°C gerührt und dann auf Zimmertemperatur abgekühlt.

Es wurde eine 39,5 gew-%ige Dispersion mit einer Grenzviskositätszahl (gemessen in DMF mit 0,3 % $NaNO_3$) $[\eta]$ = 1,57 dl/g erhalten.

1.2 Hydrolysierung

Von dieser 39,5 gew.-%igen Dispersion werden 60,57 kg in einem mit Rührwerk versehenen und für 30 bar Druck ausgelegten Edelstahlautoklaven zusammen mit 6,074 kg NaOH, welche in 80,35 kg Wasser gelöst wurde, vorgelegt und nach Verschließen des Autoklaven unter Stickstoff auf 185°C augeheizt. Nach 5 Stunden bei 185°C ist die Reaktion beendet. Unter gleichzeitiger Kühlung wird das Entspannungsventil vorsichtig geöffnet und das entweichende Ammoniak/Dampf-Gemisch mit einem Wäscher entsorgt. Bei erreichter Drucklosigkeit im Autoklaven werden 50 g eines Entschäumers wie einem Dimethylpolysiloxan (Baysilon® AC) als 30 %ige wäßrige Emulsion zugegeben und der Autoklaveninhalt bei geöffnetem Entspannungsventil ausgekocht, bis ein pH-Wert von 7 erreicht ist.

Gaschromatographisch können keine Restmonomeren festgestellt werden.

1.3 Wasserstoffperoxid-Behandlung

Nach Erreichen eines pH-Wertes von 7 im Hydrolysat wird auf 50°C gekühlt und 6,457 kg 35 gew.-%iges Wasserstoffperoxid gelöst in 10 l entionisiertem Wasser zum Ansatz gegeben und nach Verschließen des Autoklaven unter Rühren 4 Stunden auf 80°C gehalten.

Anschließend wird der Ansatz gekühlt und nach Entspannen auf 25 Gew.-% mit entionisiertem Wasser verdünnt.

Analysedaten des so hergestellten Produktes:

```
Festkörper              24,8 Gew.-%

pH-Wert                 6,7

Viskosität (20° C)      4.800 mPa.s

(Höppler)

η_rel.*                 1,48

Farbe                   schwach gelb, opak
```

* Für die Messung der rel. Viskosität ($\eta_{rel.}$) wird 1 g trockenes Hydrolysat in 100 ml 2-molarer wäßriger $NaNO_3$-Lösung gelöst.

Beispiel 2

2.1 Polymerisation

In einem mit Rührer versehenen Autoklaven werden

```
48      kg      entionisiertes Wasser
 0,12   kg      20 gew.-%iges wäßriges
                Mersolat® (Alkansulfonat)
 0,12   kg      2N-H₂SO₄
 1,320  kg      Acrylnitril
 0,84   kg      Styrol
 0,24   kg      Methylacrylat
```

zusammen vermischt und nach Verschließen des Autoklaven unter Stickstoff auf 40°C augeheizt. Nach Erreichen dieser Temperatur werden

```
1,324   kg      einer Lösung aus 0,324 kg
                35 gew.-%igem H₂O₂ und 1 kg
                entionisiertem Wasser
1,108   kg      einer Lösung aus 0,108 kg
                Isoascorbinsäure und 1 kg
                entionisiertem Wasser
```

als Redoxinitiator über eine Druckschleuse zum Autoklaveninhalt gegeben.
Darauf erfolgt innerhalb von 300 Minuten die gleichzeitige und kontinuierliche Zuschleusung von
1. einem Monomergemisch, bestehend aus
25,08 kg    Acrylnitril
15,96 kg    Styrol
4,56 kg     Methylacrylat
2. einer Initiatorlösung, bestehend aus
1,08 kg     Wasserstoffperoxid, 35 ge.-%ig
10,8 kg     entioinsiertem Wasser
3. einer Emulgatorlösung, bestehend aus
8,40 kg     entionisiertem Wasser
2,28 kg     20 gew.-%iger wäßriger Mersosolat®-Lösung (Alkansulfonat)
0,36 kg     Isoascorbinsäure
Nach Beendigung der Zuschleusung wird der Autoklaveninhalt noch 360 Minuten bei 40°C gerührt und dann auf Zimmertemperatur abgekühlt.
Es wurde eine 39,5 gew.-%ige Dispersion mit einer Grenzviskositätszahl (gemessen in DMF mit 0,3 % NaNO₃) $[\eta]$ = 1,05 dl/g erhalten.

2.2 Hydrolyse

Die Hydrolyse des Produktes nach 2.1 erfolgt entsprechend Beispiel 1 mit dem Unterschied, daß anschließend kein H₂O₂-Abbau durchgeführt und das Produkt nach der Hydrolyse und NH₃-Entfernung gleich auf 25 Gew.-% mit entionisiertem Wasser verdünnt wird.

Analysedaten des so hergestellten Produktes:

| | |
|---|---|
| Festkörper | 25,4 Gew.-% |
| pH-Wert | 6,9 |
| Viskosität (20°C) (Höppler) | 14.200 mPa.s |
| $\eta_{rel.}$* | 1,95 |
| Farbe | gelb-braun, opak |

\* Für die Messung der rel. Viskosität ($\eta_{rel.}$) wird 1 g trockenes Hydrolysat in 100 ml 2-molarer wäßriger $NaNO_3$-Lösung gelöst.

Es konnten gaschromatographisch keine Restmonomeren festgestellt werden.

Beispiel 3

3.1 Polymerisation

Die Polymerisatherstellung erfolgt analog dem Beispiel 2 mit folgender Rezepturänderung:

Autoklavenbeschickung:

| | |
|---|---|
| 40,0 kg | entionisiertes Wasser |
| 0,1 kg | 20 gew.-%iges wäßriges Mersolat® (Alkansulfonat) |
| 0,1 kg | 2N $H_2SO_4$ |
| 1,3 kg | Acrylnitril |
| 0,7 kg | Styrol |

Initiatorzugabe bei 40°C:

| | |
|---|---|
| 1,18 kg | einer Lösung aus 0,18 kg 35 gew.-%igem $H_2O_2$ und 1 kg entionisiertem Wasser |
| 1,06 kg | einer Lösung aus 0,06 kg Isoascorbinsäure und 1 kg entionisiertem Wasser |

Zuschleusung 1:

| | |
|---|---|
| 26,0 kg | Acrylnitril |
| 14,0 kg | Styrol |

Zuschleusung 2:

| | |
|---|---|
| 9,0 kg | entionisiertes Wasser |
| 0,6 kg | $H_2O_2$, 35 gew.-%ig |

Zuschleusung 3:

| | |
|---|---|
| 7,0 kg | entionisiertes Wasser |
| 1,9 kg | 20 gew.-%iger wäßriger Mersolat®-Lösung (Alkansulfonat) |
| 0,2 kg | Isoascorbinsäure |

Es wurde eine 39,8 gew.-%ige Dispersion mit einer Grenzviskositätszahl (gemessen in DMF mit 0,3 % NaNO$_3$) [$\eta$] von 1,20 dl/g erhalten.

3.2 Hydrolyse

70 kg der 39,8 gew.-%igen Dispersion des Copolymere nach 3.1 werden im Rührautoklaven zusammen mit 16,23 kg KOH (88-90 gew.-%ig) und 58,8 kg entionisiertem Wasser vorgelegt und nach Verschließen des Autoklaven unter Stickstoff auf 175°C augeheizt. Nach 5 Stunden bei 175°C ist die Reaktion beendet und es wird entsprechend Beispiel 2 (Hydrolyse) ein 25 gew.-%iges Produkt erhalten.

## Analysedaten dieses Produktes:

| | |
|---|---|
| Festkörper | 25 Gew.-% |
| pH-Wert | 7,4 |
| Viskosität (20°C) (Höppler) | 4.000 mPa.s |
| $\eta_{rel.}$* | 2,23 |

\* Für die Messung der rel. Viskosität ($\eta_{rel.}$) wird 1 g trockenes Hydrolysat in 100 ml 2 molarer wäßriger NaNO$_3$-Lösung gelöst.

Gaschromatographisch konnten keine Restmonomeren festgestellt werden.

Anwendungsbeispiele:

Beispiel A

In einem separaten Schlichtekocher wird der Schlichteansatz aus:

300 l Wasser
30 kg des Produkts nach Beispiel 2 und
30 kg wasserlösliche Stärke

20 Minuten unter Rühren bei 90°C hergestellt und in den Schlichtetrog gegeben, wo ein konstantes Niveau und eine Temperatur von 90°C gehalten wird.

Baumwoll-Kettfäden der Stärke 50 Nm werden mit einer Fadendichte von 22 Fäden/cm über Walzen durch den Schlichtetrog geführt.

Nach dem Verlassen des Schlichtetrogs wird überschüssiges Schlichtemittel von der Fadenschar durch ein Quetschwalzenpaar abgequetscht und anschließend zum Trocknen über beheizte Walzen mit einer Temperatur von 140°C geführt. Vor dem Aufwickeln (Aufbäumen genannt) erfolgt die Kettfadentrennung.

Die Endfeuchte des geschlichteten Fadens betrug 8,5 %.

Die geschlichteten Baumwoll-Kettfäden ließen sich auf handelsüblichen Webmaschinen einwandfrei verarbeiten.

Beispiele B, C und D:

Es wurde wie im Beispiel A beschrieben vorgegangen. Die entsprechenden Daten sind in der Tabelle 1 zusammengestellt.

| Anwendungsbeispiel | A | B | C | D |
|---|---|---|---|---|
| Garnart | Baumwolle | Zellwolle | Baumwolle | Baumwolle/Polyester 50 / 50 |
| Fadenstärke | 50 Nm | 50 Nm | 24 Nm | 64 Nm |
| Fadendichte | 22 Fäden/cm | 26 Fäden/cm | 18 Fäden/cm | 25 Fäden/cm |
| Schlichteansatz | | | | |
| Wasser | 300 l | 400 l | 100 l | 320 l |
| Stärke | 30 kg | – | – | 50 kg |
| CMC | – | 14 kg | – | 5 kg |
| Polymeres | 30 kg nach Beisp.2 | 10 kg nach Beisp.2 | 100 kg nach Beisp.1 | 50 kg nach Beisp.3 |
| Schlichtetrog-temperatur | 90° C | 85° C | 80° C | 85° C |
| Trocknungs-temperatur | 140° C | 145° C | 140° C | 140° C |
| Maschinenge-schwindigkeit | 72 m/min | 80 m/min | 68 m/min | 50 m/min |
| Endfeuchte | 8,5 % | 9 % | 6 % | 5 % |

**Patentansprüche**

1. Verfahren zur Herstellung von wäßrigen Lösungen hydrolysierter Styrol/Acrylnitril-Copolymerisate deren Carboxylgruppen ganz oder teilweise als NH$_4$-, Erdalkali- und/oder Alkalisalz vorliegen, dadurch gekennzeichnet, daß man
a) 40-90 Gew.-% Acrylnitril,
b) 10-60 Gew.-% Styrol
und
c) 0-20 Gew.-% wenigstens eines weiteren alkalisch hydrolysierbaren Monomeren
einer Suspension- oder Emulsionspolymerisation unterwirft, die wäßrige Dispersion oder Emulsion anschließend bei 90-220°C in Gegenwart von Alkalien und/oder Erdalkalien hydrolysiert und gegebenenfalls die Copolymerisatlösung mit Wasserstoffperoxid behandelt, wobei ein Teil des Styrols durch ein anderes nicht hydrolysierbares Monomer ersetzt sein kann.

2. Verfahren nach Anspruch 1, dadurch gekennzeichnet, daß nur Acrylnitril und Styrol copolymerisiert werden.

3. Verfahren nach Anspruch 1, dadurch gekennzeichnet, daß 3 bis 15 Gew.-% wenigstens eines weiteren alkalisch hydrolysierbaren Monomeren copolymerisiert werden.

4. Verfahren nach einem der Ansprüche 1 oder 3, dadurch gekennzeichnet, daß als alkalisch hydrolysierbares Monomer c) Acrylate, Methacrylate mit bis zu 5 C-Atomen in der Alkoholkomponente, Vinylacetat oder ungesättigte Carbonsäuren copolymerisiert werden.

5. Verwendung der wäßrigen Lösungen gemäß wenigstens einem der vorhergehenden Ansprüche als Schlichtemittel für Fasern.

6. Verwendung nach Anspruch 5, dadurch gekennzeichnet, daß eine Lösung verwendet wird, deren Gehalt an Festkörper bezogen auf die gesamte Lösung 10 bis 35 Gew.-% beträgt.


**Claims**

1. A process for the preparation of aqueous solutions of hydrolysed styrene/acrylonitrile copolymers whose carboxyl groups are completely or partially present as $NH_4$, alkaline earth metal and/or alkali metal salts, characterised in that
a) 40 - 90% by weight of acrylonitrile,
b) 10 - 60% by weight of styrene
and
c) 0 - 20% of at least one other monomer which may be hydrolysed by an alkali
are subjected to suspension or emulsion polymerisation, the aqueous dispersion or emulsion is then hydrolysed at 90 - 220°C in the presence of alkali metal hydroxides or alkaline earth metal hydroxides and optionally the copolymer solution is treated with hydrogen peroxide, whereby some of the styrene may be replaced by another non-hydrolysable monomer.

2. A process according to Claim 1, characterised in that only acrylonitrile and styrene are copolymerised.

3. A process according to Claim 1, characterised in that 3 to 15% by weight of at least one other monomer which may be hydrolysed by an alkali is copolymerised.

4. A process according to one of Claims 1 or 3, characterised in that monomers copolymerised as monomers c) which may be hydrolysed by an alkali are acrylates, methacrylates with up to 5 carbon atoms in the alcohol component, vinyl acetate or unsaturated carboxylic acids.

5. Use of aqueous solutions in accordance with at least one of the previous Claims as a sizing agent for fibres.

6. A use according to Claim 5, characterised in that a solution is used whose solids content, relative to the total solution, is 10 to 35% by weight.

**Revendications**

1.  Procédé de préparation de solutions aqueuses de copolymérisats hydrolysés styrène/acrylonitrile dont les groupements carboxyles se présentent totalement ou partiellement sous la forme d'un sel de NH$_4$, de base alcalino-terreuse et/ou d'alcali, caractérisé en ce qu'on soumet
    a) 40 à 90% en poids d'acrylonitrile,
    b) 10 à 60% en poids de styrène
    et
    c) 0 à 20% en poids d'au moins un autre monomère hydrolysable en milieu alcalin
    à une polymérisation en suspension ou en émulsion, qu'on hydrolyse ensuite la dispersion aqueuse ou émulsion entre 90 et 220°C en présence d'alcalis et/ou de bases alcalino-terreuses et qu'on traite le cas échéant la solution de copolymérisat par le peroxyde d'hydrogène, une partie du styrène pouvant être remplacée par un autre monomère non hydrolysable.

2.  Procédé selon la revendication 1, caractérisé en ce qu'on ne copolymérise que l'acrylonitrile et le styrène.

3.  Procédé selon la revendication 1, caractérisé en ce qu'on copolymérise 3 à 15% en poids d'au moins un autre monomère hydrolysable en milieu alcalin.

4.  Procédé selon l'une des revendications 1 ou 3, caractérisé en ce qu'on copolymérise comme monomère hydrolysable en milieu alcalin c) des acrylates, des méthacrylates possédant jusqu'à 5 atomes de C dans le composant alcool, de l'acétate de vinyle ou des acides carboxyliques insaturés.

5.  Utilisation des solutions aqueuses selon au moins une des revendications précédentes comme agents d'encollage pour fibres.

6.  Utilisation selon la revendication 5, caractérisée en ce qu'on utilise une solution dont la teneur en solides, rapportée à la solution totale, est de 10 à 35% en poids.